# EUROPÄISCHE PATENTSCHRIFT

(11) **EP 0 689 953 B1**
(45) Veröffentlichungstag und Bekanntmachung des Hinweises auf die Patenterteilung: **10.09.1997**
(21) Anmeldenummer: 95109886.2
(22) Anmeldetag: 24.06.1995
(51) Int. Cl.: B60J 10/12

(54) **Glasdeckel für ein Fahrzeugdach**
Glass panel for vehicle roof
Panneau en vitre pour toit de véhicule

(30) Priorität: 28.06.1994 DE 4422176
(43) Veröffentlichungstag der Anmeldung: 03.01.1996
(73) Patentinhaber: Rockwell International GmbH, 60314 Frankfurt (DE)
(72) Erfinder: Scherf, Wilhelm, D-63110 Rodgau (DE); Federmann, Dieter, D-63450 Hanau (DE)
(74) Vertreter: Oppermann, Ewald, Dipl.-Ing.

(56) Entgegenhaltungen:
- DE-A- 3 742 719
- DE-A- 4 238 889
- DE-U- 9 307 831

## Beschreibung

Die Erfindung bezieht sich auf einen Glasdeckel für ein Fahrzeugdach entsprechend dem Oberbegriff des Patentanspruchs 1. Derartige Glasdeckel werden bei allen gebräuchlichen Dachkonstruktionen eingesetzt, beispielsweise bei Schiebedächern und Schiebehebedächern.

Bei Glasdeckeln kommt der Ausgestaltung und Anbringung des Randspaltabdichtungsprofils an der Deckelplatte besondere Bedeutung zu. Einerseits soll das Randspaltabdichtungsprofil mit geringem Aufwand am Glasdeckel montierbar sein, andererseits muß das Randspaltabdichtungsprofil aber nicht nur die Abdichtung gegenüber der Dachöffnung des Fahrzeugs bei geschlossenem Dach übernehmen, sondern es muß auch eine zuverlässige Abdichtung zwischen dem Randspaltabdichtungsprofil und der Deckelplatte herbeigeführt werden.

Bei einem bekannten Glasdeckel (DE-U-93 07 831.5) der eingangs angegebenen Gattung liegt das aufgesteckte Randspaltabdichtungsprofil der Deckelplattenkante mit einer ebenen Fläche des massiven Bereichs des Randspaltabdichtungsprofils an, wobei die Abdichtlippe die Außenfläche der Deckelplatte übergreift und der Deckelplatte von oben anliegt. Dadurch entsteht nicht nur eine unerwünschte Stufenbildung zwischen der Dichtlippe und der Aussenfläche der Deckelplatte, die Abdichtung zwischen dem Randspaltabdichtungsprofil und der Deckelplatte läßt auch zu wünschen übrig. Feuchtigkeit und Verunreinigungen können leicht zwischen Abdichtlippe und Deckelplatte eindringen und werden auch an der Anlagefläche zwischen dem massiven Bereich des Randspaltabdichtungsprofils und der Deckelplattenkante nicht zuverlässig zurückgehalten.

Der Erfindung liegt die Aufgabe zugrunde, einen Glasdeckel entsprechend dem Oberbegriff des Anspruchs 1 bereitzustellen, bei dem eine zuverlässige Abdichtung zwischen der Deckelplatte und dem Randspaltabdichtungsprofil erzielt ist.

Die gestellte Aufgabe wird durch die kennzeichnenden Merkmale des Patentanspruchs 1 gelöst. Vorteilhafte Weiterbildungen sind in den Unteransprüchen angegeben und nachstehend ebenfalls erläutert.

Gemäß der Erfindung ist die Dichtlippe mit ihrer Außenfläche der abgerundeten Deckelplattenkante zugekehrt, so daß sich die Dichtlippe beim Aufstecken auf den über den Rand der Deckelplatte vorstehenden Flansch mit ihrer Außenfläche der Deckelplattenkante anlegt. Die nutähnliche Vertiefung in der Außenfläche der Dichtlippe sorgt im Zusammenwirken mit der Ausbildung der Dichtlippe im übrigen bei Aufnahme der Deckelplattenkante auf besondere Weise für eine zuverlässige Abdichtung. Hierbei legt sich der längere Schenkel der Dichtlippe unter elastischer Vorspannung dicht an die Deckelplattenkante an, wobei die Einschwenkdeformation des längeren Schenkels durch Anschlag an den massiven inneren Bereich des Randspaltabdichtungsbereichs begrenzt ist. Gleichzeitig mit der Einschwenkbewegung nimmt der längere Schenkel, der mit dem kürzeren Schenkel der Dichtlippe eine winkelförmige Struktur bildet, den kürzeren Schenkel über die im Scheitelbereich der beiden Schenkel befindliche Materialverdickung durch Hebelwirkung in Schwenkrichtung mit, wodurch der kürzere Schenkel dem oberen Bereich der Deckelplattenkante sehr fest angepreßt wird. Im Ergebnis legt sich die Außenfläche der Dichtlippe über den für die Abdichtung wesentlichen Bereich der Umfangsfläche der Deckelplattenkante dicht an, so daß keine Feuchtigkeit und keine Schmutzpartikel zwischen Randspaltabdichtungsprofil und Deckelplattenkante eindringen können. Diese vorteilhafte Abdichtwirkung ergibt sich durch die erfindungsgemäße Ausbildung zwangsläufig durch einfaches Aufstecken des Randspaltabdichtungsprofils auf den erwähnten Flansch des Verstärkungsrahmens. Die Erfindung sorgt auch bei Maßabweichungen der Deckelplatte, wie sie durch Schleiftoleranzen am Glasdeckelrand gegeben sein können, für einen Ausgleich ohne Beeinträchtigung der Abdichtwirkung.

Entsprechend Anspruch 2 ist das Randspaltabdichtungsprofil so ausgebildet, daS sich die beim Aufstecken auf den Flansch des Verstärkungsrahmens ergebenden elastischen Deformationen im wesentlichen auf die Dichtlippe selbst und die ihr angrenzende Ausbuchtung beschränken. Auf diese Weise gelingt es, auch beim aufgesteckten Randspaltabdichtungsprofil eine im wesentlichen ebene obere Fläche ohne Aufwölbung zu erzielen, die absatz- bzw. stufenfrei an die Außenfläche der Deckelplatte anschließt.

Die im Anspruch 3 angegebenen an sich bekannten Maßnahmen (DE 93 07 831 U1, Fig. 3 a bis 5 c) sorgen für einen Festsitz des Randspaltabdichtungsprofils auf dem Flansch des Verstärkungsrahmens, so daß die beim Aufstecken in gewünschter Weise eingetretenen elastischen Verformungen bestimmter Bereiche des Randspaltabdichtungsprofils sicher beibehalten werden.

Weitere Einzelheiten der Erfindung werden nachfolgend anhand der zwei Ausführungsbeispiele darstellenden Zeichnungen näher erläutert. Darin zeigt:
- Fig. 1: die Draufsicht auf ein Fahrzeugdach mit einem in Schließstellung befindlichen Glasdeckel,
- Fig. 2: einen Querschnitt durch ein Randspaltabdichtungsprofil in Ruhestellung, d.h. vor dem Aufstecken auf den Deckelverstärkungsrahmen,
- Fig. 3: den abgebrochenen Schnitt entlang der Linie III-III in Fig. 1 durch die Vorderkante des Glasdeckels mit auf den Verstärkungsrahmen aufgestecktem Randspaltabdichtungsprofil gemäß Fig. 2 und
- Fig. 4: einen der Fig. 3 ähnlichen Schnitt, jedoch mit einem weiteren Ausführungsbeispiel des Verstärkungsrahmens, auf den das Randspaltabdichtungsprofil nach Fig. 2 aufgesteckt ist.

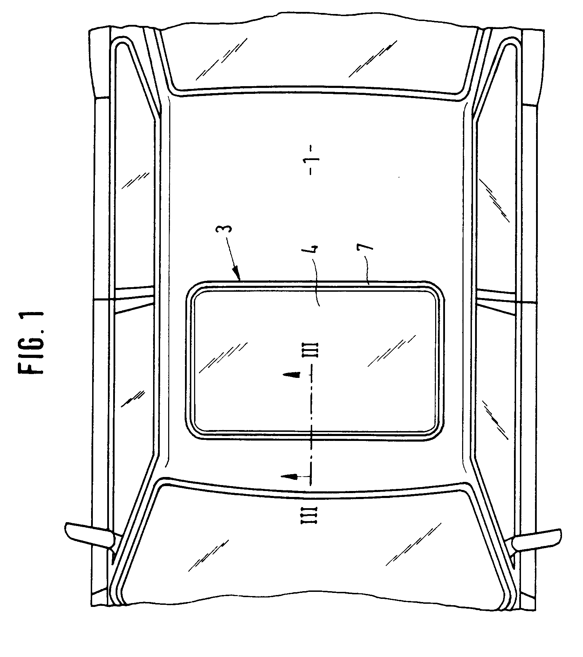

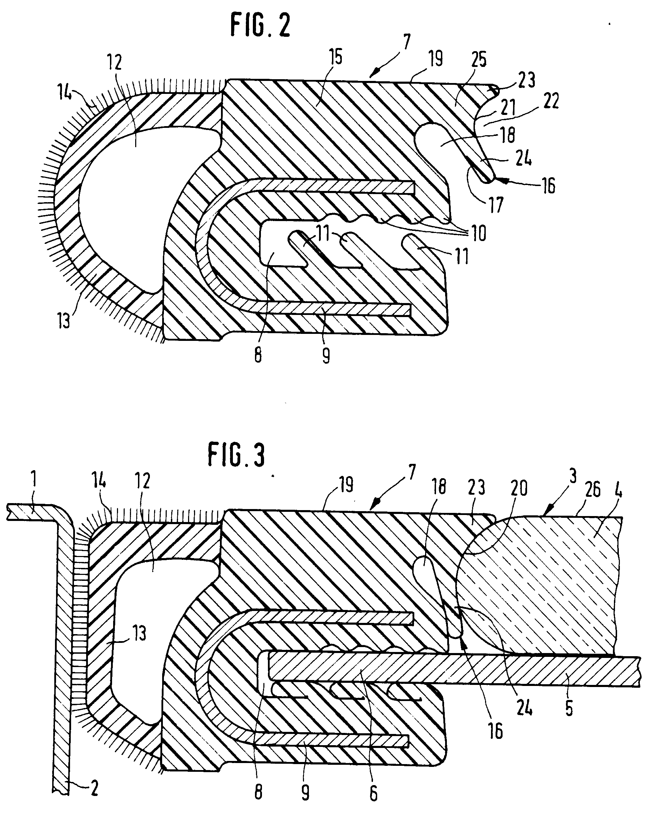

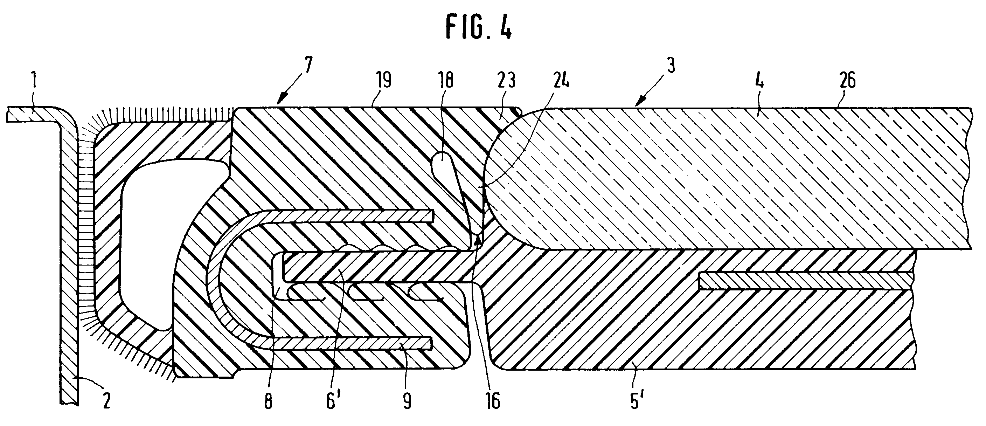

Wie aus Fig. 1 in Verbindung mit den Fig. 3 und 4 hervorgeht, befindet sich in der für derartige Dachkonstruktionen üblichen Weise im vorderen Bereich des festen Fahrzeugdachs 1 eine Dachöffnung 2, die in Schließstellung durch einen Glasdeckel 3 geschlossen ist. Der Glasdeckel 3 ist in üblicher Weise aus der Dachöffnung 2 zu deren mindestens partieller Freigabe verlagerbar. Die der Verlagerung dienenden Führungs- und Betätigungselemente sind nicht dargestellt, da sich die Erfindung nicht darauf bezieht.

Der Glasdeckel besteht aus einer der Dachwölbung angepaßten Deckelplatte 4 aus Glas oder einem glasähnlichen Werkstoff. Im Randbereich ist die Deckelplatte 4 von unten durch einen metallenen Verstärkungsrahmen 5 abgestützt, der mit der Deckelplatte 4 fest verbunden ist und umlaufend über den Rand der Deckelplatte 4 mit einem horizontalen Flansch 6 vorsteht, wie das Ausführungsbeispiel gemäß Fig. 3 verdeutlicht. Bei dem Ausführungsbeispiel gemäß Fig. 4 ist ein aus einem unterseitig angespritzten Kunststoffrahmen und einem eingebetteten Metallrahmen zusammengesetzter Verstärkungsrahmen 5' vorgesehen, der mit einem horizontalen Flansch 6' über den Rand der Deckelplatte 4 um den Glasdeckel umlaufend vorsteht.

Beiden Ausführungsformen des Verstärkungsrahmens gemäß der Fig. 3 und 4 ist ein in Form und Abmessungen identisches Randspaltabdichtungsprofil 7 gemäß Fig. 2 zugeordnet, das mit einer horizontalen Klemmnut 8 klemmend auf den Flansch 6 bzw. 6' aufgesteckt ist. In das Randspaltabdichtungsprofil 7 ist eine metallene Verstärkungseinlage 9 eingebettet, welche die Klemmnut 8 U-förmig umgibt. Weiterhin befinden sich, wie am besten aus Fig. 2 hervorgeht, an den gegenüberliegenden Wandflächen der Klemmnut 8 Klemmvorsprünge, die im gezeichneten Ausführungsbeispiel an der oberen Wandfläche als parallele Rippen 10 mit dazwischenbefindlichen Vertiefungen und an der unteren Wandfläche als widerhakenähnlich gerichtete Klemmvorsprünge 11 ausgebildet sind. Die Verstärkungseinlage 9, die Rippen 10 und die Klemmvorsprünge 11 sorgen gemeinschaftlich für einen Festsitz des auf den Flansch 6 bzw. 6' aufgesteckten Randspaltabdichtungsprofils 7.

Zur näheren Erläuterung des Randspaltabdichtungsprofils 7 wird nunmehr auf Fig. 2 Bezug genommen. Der Hauptkörper des Randspaltabdichtungsprofils 7, in den auch die Verstärkungseinlage 9 eingebettet ist, besteht aus einem elastomeren Material geeigneter Härte. An diesen Hauptkörper schließt sich an der Außenseite eine Hohlkammer 12 an, so daß das Randspaltabdichtungsprofil an seiner Außenseite eine größere Verformbarkeit aufweist, um einen dichten Abschluß an der umlaufenden Kante der Dachöffnung 2 zu erzielen. Die Hohlkammer 12 wird einerseits von dem Hauptkörper des Randspaltabdichtungsprofils 7 und andererseits von einer verhältnismäßig dünnen Außenwandung 13 begrenzt. Das elastomere Material der Außenwandung 13 kann von geringerer Härte als der Hauptkörper sein. Die Außenwandung 13 ist an der außenliegenden Fläche mit einer bürstenförmigen Beflockungsschicht 14 versehen.

Oberhalb der Klemmnut 8 und der Verstärkungseinlage 9 befindet sich der massive Bereich 15 des Randspaltabdichtungsprofils 7. Dieser Bereich ist durch seine Materialanhäufung und die Aussteifungswirkung der Verstärkungseinlage 9 nur wenig verformbar. An diesen massiven Bereich schließt auf der Innenseite des Randspaltabdichtungsprofils 7 eine eigenartig geformte Dichtlippe 16 an, deren Innenfläche 17 teilweise von einer sich in den massiven Bereich 15 hineinerstreckenden Einbuchtung 18 gebildet ist. Die Einbuchtung 18 endet im massiven Bereich 15 mit beträchtlichem Abstand vor der oberen Fläche 19 des Randspaltabdichtungsprofils.

Die beim Aufstecken des Randspaltabdichtungsprofils 7 auf den Flansch 6 bzw. 6' der abgerundeten Deckelplattenkante 20 zugekehrte Außenfläche 21 der Dichtlippe 16 weist eine nutähnliche Vertiefung 22 auf, durch welche die Dichtlippe 16 in einen kürzeren oberen Schenkel 23 und einen längeren unteren Schenkel 24 gegliedert ist. Der einerseits durch die Außenfläche 21 der nutähnlichen Vertiefung 22 und andererseits durch die Innenfläche 17 der Dichtlippe 16 begrenzte längere Schenkel 24 ist bei nicht aufgestecktem Randspaltabdichtungsprofil schräg nach unten und zur Deckelplattenkante 20 hin gerichtet. Der einerseits von der Außenfläche 21 der nutähnlichen Vertiefung 22 und andererseits von der oberen Fläche 19 des massiven Bereichs 15 begrenzte kürzere Schenkel 23 weist schräg nach oben. Auf diese Weise bilden die beiden Schenkel 23, 24 eine winkelförmige Struktur, die über den gemeinsamen massiven Scheitelbereich 25 mit dem massiven Bereich 15 in Verbindung steht.

Die beschriebene Winkelstruktur der beiden Schenkel 23 und 24 im Verein mit dem zugehörigen massiven Scheitelbereich 25 führt dazu, daß Schwenkbewegungen des einen Schenkels auf den anderen Schenkel teilweise übertragen werden, und zwar in derselben Schwenkrichtung. Wird das beschriebene Randspaltabdichtungsprofil 7 auf den Flansch 6 bzw. 6' mittels der Klemmnut 8 aufgesteckt, so kommt die Außenfläche 21 der Dichtlippe 16 mit der abgerundeten Deckelplattenkante 20 in Berührung. Hierdurch kommt es zu einer Einschwenkbewegung des längeren unteren Schenkels 24, die erst dann beendet ist, wenn die Innenfläche 17 der Dichtlippe zur Anlage an den massiven Bereich 15, der auf dieser Seite der Einbuchtung 18 die Einbuchtung begrenzt, gelangt. Bei dieser Einschwenkbewegung findet eine erhebliche räumliche Verkleinerung der Einbuchtung 18 statt. Durch den Einschwenkvorgang legt sich die Außenfläche 21 der Dichtlippe 16 der Deckelplattenkante 20 unter Vorspannung dicht an, wobei der obere Schenkel 23 durch die beim Einschwenken des längeren Schenkels 24 zwischen den Schenkeln auftretende Hebelwirkung dem oberen Bereich der Deckelplattenkante 20 fest angedrückt ist, so daß an dieser Stelle keine Spaltbildung erfolgen kann. Aufgrund der beschriebenen Konstruktion des Randspaltabdichtungsprofils 7 mit der daran angebrachten besonderen Dichtlippe 16 schmiegt sich die elastische Dichtlippe 16 der beispielsweise halbkreisförmig abgerundeten Deckelplatte 20 großflächig und dicht an, wobei die elastische Pressung im Bereich des kürzeren oberen Schenkels 23 besonders groß ist.

Wie die Fig. 3 und 4 zu erkennen geben, befindet sich die obere Fläche 19 des Randspaltabdichtungsprofils 7 etwa in der Ebene der Außenfläche 26 der Deckelplatte 4, d.h. durch die besondere Ausgestaltung des Randspaltabdichtungsprofils 7 beschränkt sich die elastische Deformation des Randspaltabdichtungsprofils 7 beim Aufstecken desselben auf den Flansch 6 bzw. 6' auf die Dichtlippe 16 selbst und die ihr angrenzende Einbuchtung 18 ohne wesentliche Aufwölbung der oberen Fläche 19 des Randspaltabdichtungsprofils 7.

## Patentansprüche

1. Glasdeckel für ein Fahrzeugdach, der in seiner Schließstellung eine Dachöffnung (2) unter allseitiger Abdichtung ausfüllt und aus dieser zu ihrer mindestens partiellen Freigabe verlagerbar ist, mit einer Deckelplatte (4) aus Glas od.dgl., einem die Deckelplatte (4) in ihrem Randbereich von unten abstützenden Verstärkungsrahmen (5, 5') und einem die Deckelplatte (4) umgebenden Randspaltabdichtungsprofil (7), das mit einer horizontalen Klemmnut (8) klemmend auf einen über den Rand der Deckelplatte (4) horizontal vorstehenden Flansch (6, 6') des Verstärkungsrahmens (5, 5') aufgesteckt ist und sich mit einer Dichtlippe (16) dicht an den Rand der Deckelplatte (4) anlegt, wobei die Dichtlippe (16) von dem oberhalb der Klemmnut (8) befindlichen massiven Bereich (15) des Randspaltabdichtungsprofils (7) ausgeht und die Innenfläche (17) der Dichtlippe (16) teilweise von einer sich in den massiven Bereich (15) hineinerstreckenden Einbuchtung (18) gebildet ist, **dadurch gekennzeichnet,** daß die Dichtlippe (16) mit ihrer Außenfläche (21) der abgerundeten Deckelplattenkante (20) zugekehrt ist und diese Außenfläche (21) zur Aufnahme der Deckelplattenkante (20) eine nutähnliche Vertiefung (22) aufweist, durch welche die Dichtlippe (16) in einen kürzeren oberen Schenkel (23) und einen längeren unteren Schenkel (24) gegliedert ist, von denen der einerseits durch die Aussenfläche (21) der nutähnlichen Vertiefung (22) und andererseits durch die Innenfläche (17) der Dichtlippe (16) begrenzte längere Schenkel (24) bei nicht aufgestecktem Randspaltabdichtungsprofil (7) schräg nach unten und zur Deckelplattenkante (20) hin gerichtet ist, bei aufgestecktem Randspaltabdichtungsprofil (7) bis zur Anlage der Innenfläche (17) an dem massiven Bereich (15) des Randspaltabdichtungsprofils (7) unter räumlicher Verkleinerung der Einbuchtung (18) in eine Dichtstellung eingeschwenkt ist, in welcher die Außenfläche (21) der nutähnlichen Vertiefung (22) der Deckelplattenkante (20) unter Vorspannung dicht angelegt ist, und der obere Schenkel (23) durch die beim Einschwenken des längeren Schenkels (24) zwischen den Schenkeln (23, 24) auftretende Hebelwirkung dem oberen Bereich der Deckelplattenkante (20) fest angedrückt ist.

2. Glasdeckel nach Anspruch 1, **dadurch gekennzeichnet,** daß sich die obere Fläche (19) des Randspaltabdichtungsprofils (7) etwa in der Ebene der Außenfläche (26) der Deckelplatte (4) befindet und die elastische Deformation des Randspaltabdichtungsprofils (7) beim Aufstecken desselben auf den Flansch (6, 6') auf die Dichtlippe (16) selbst und die ihr angrenzende Einbuchtung (18) ohne wesentliche Aufwölbung der oberen Fläche (19) des Randspaltabdichtungsprofils (7) beschränkt ist.

3. Glasdeckel nach Anspruch 1 oder 2, **dadurch gekennzeichnet,** daß in das Randspaltabdichtungsprofil (7) eine metallene Verstärkungseinlage (9) eingebettet ist, welche die Klemmnut (8) U-förmig umgibt, und daß die Klemmnut (8) an mindestens einer ihrer gegenüberliegenden Wandflächen mit Klemmvorsprüngen od.dgl. (10, 11) versehen ist.

## Claims

1. Glass lid for a vehicle roof, which in its closed position fills a roof opening (2) with sealing all around and is displaceable from this opening to expose it at least partly, the lid comprising a lid plate (4) of glass or the like, a reinforcing frame (5, 5') supporting the lid plate (4) in its edge region from below, and an edge gap sealing profile (7), surrounding the lid plate (4), which profile is pushed with a horizontal clamping groove (8) in clamping manner onto a flange (6, 6') of the reinforcing frame (5, 5') projecting horizontally beyond the edge of the lid profile (4), and bears with a sealing lip (16) sealingly against the edge of the lid plate (4), wherein the sealing lip (16) starts from the solid region (15) of the edge gap sealing profile (7) situated above the clamping groove (8), and the inner surface (17) of the sealing lip (16) is formed partly of a recess (18) extending into the solid region (15), characterized in that the sealing lip (16) faces with its outer surface (21) towards the rounded lid plate edge (20) and this outer surface (21) possesses a groove-like depression (22) for seating the lid plate edge (20), by which the sealing lip (16) is divided into a shorter upper arm (23) and a longer lower arm (24), of which the longer arm (24), bounded on the one side by the outer surface (21) of the groove-like depression (22) and on the other side by the inner surface (17) of the sealing lip (16) is orientated obliquely downwards and towards the lid plate edge (20) when the edge gap sealing profile (7) is not pushed on, is pivoted inwards into a sealing position when the edge gap sealing profile (7) is pushed on until the inner face (17) comes into bearing against the solid region (15) of the edge gap sealing profile (7) with volumetric reduction of the recess (18), in which (sealing position) the outer surface (21) of the groove-like depression (22) is placed sealingly with prestress against the lid plate edge (20), and the upper arm (23) is pressed firmly against the upper region of the lid plate edge (20) by the lever action that occurs between the arms (23, 24) during the pivoting-in of the longer arm (24).

2. Glass lid according to claim 1, characterized in that the upper surface (19) of the edge gap sealing profile (7) is situated approximately in the plane of the outer surface (26) of the lid plate (4) and the elastic deformation of the edge gap sealing profile (7) when the latter is pushed onto the flange (6, 6') is limited to the sealing lip (16) itself and to the recess (18) adjoining it, without substantial bulging of the upper surface (19) of the edge gap sealing profile (7).

3. Glass lid according to claim 1 or 2, characterized in that a metal reinforcing inlay (9) is embedded into the edge gap sealing profile (7), which (inlay) surrounds in U-shape the clamping groove (8), and that the clamping groove (8) is provided, on at least one of its mutually facing surfaces, with clamping projections or the like (10, 11).

## Revendications

1. Panneau vitré pour un toit de véhicule qui, dans sa position de fermeture, remplit une ouverture de toit (2) avec étanchéité de tous les côtés et peut être déplacé hors de cette ouverture pour la libérer au moins partiellement, comportant une vitre (4) en verre ou analogue, un cadre de renfort (5, 5') qui renforce, par en bas, la vitre (4) dans sa zone de bordure, ainsi qu'un profilé d'étanchéité de la fente de bordure (7) qui entoure la vitre (4), qui, par une rainure de bridage horizontale (8), s'enfile, avec bridage, sur un pourtour (6, 64), qui déborde horizontalement au-delà du bord de la vitre (4), du cadre de renfort (5, 5') et qui, par une lèvre d'étanchéité (16), s'appuie étroitement contre le bord de la vitre (4), la lèvre d'étanchéité (16) partant de la zone massive (15), qui se trouve au-dessus de la rainure de bridage (8), du profilé d'étanchéité de la fente de bordure (7) et la surface intérieure (17) de la lèvre d'étanchéité (16) étant partiellement formée par une échancrure (18) qui s'étend dans la zone massive (15), caractérisé par le fait que la lèvre d'étanchéité (16) est, par sa surface extérieure (21), orientée vers le bord arrondi de la vitre (20) et que cette surface extérieure (21) présente, pour recevoir le bord (20) de la vitre, un évidement (22), analogue à une rainure, grâce auquel la lèvre d'étanchéité (16) se divise en une branche supérieure plus courte (23) et une branche inférieure plus longue (24), dont la branche plus longue (24), limitée d'une part par la surface extérieure (21) de l'évidement (22) analogue à une rainure et d'autre part par la surface intérieure (17) de la lèvre d'étanchéité (16), est, lorsque le profilé d'étanchéité de la fente de bordure (7) n'est pas enfilé, orientée obliquement vers le bas et vers le bord (20) de la vitre, et, lorsque le profilé d'étanchéité de la fente de bordure (7) est enfilé, pivote vers l'intérieur jusqu'à ce que sa surface intérieure (17) vienne s'appuyer contre la zone massive (15) du profilé d'étanchéité de la fente de bordure (7), avec raccourcissement spatial de l'échancrure (18), pour venir dans une position d'étanchéité dans laquelle la surface extérieure (21) de l'évidement (22), analogue à une rainure, s'appuie étroitement, sous précontrainte, contre le bord (20) de la vitre et dans laquelle la branche supérieure (23), par suite de l'effet de levier qui apparaît entre les branches (23, 124) lors du pivotement vers l'intérieur, de la branche plus longue (24), s'appuie fermement contre la zone supérieure du bord (20) de la vitre.

2. Panneau vitré selon la revendication 1, caractérisé par le fait que la surface supérieure (19) du profilé d'étanchéité de la fente de bordure (7) se trouve à peu près dans le plan de la surface extérieure (26) de la vitre (4) et que la déformation élastique du profilé d'étanchéité de la fente de bordure (7), lors de l'enfilage de ce profilé sur le pourtour (6, 6'), se limite à la lèvre d'étanchéité (16) elle-même et à l'échancrure (18) qui la limite, sans bombement sensible de la surface supérieure (18) du profilé d'étanchéité de la fente de bordure (7).

3. Panneau vitré selon la revendication 1 ou 2, caractérisé par le fait que, dans le profilé d'étanchéité de la fente de bordure (7) est enrobée une garniture métallique de renfort (9) qui entoure en forme de U la rainure de bridage (8) et que la rainure de bridage (8) est munie, sur au moins l'une de ses surfaces de paroi opposées, de saillies de bridage ou analogues (10, 11).
